(19) Europäisches Patentamt / European Patent Office / Office européen des brevets

(11) **EP 2 694 936 B1**

(12) **EUROPÄISCHE PATENTSCHRIFT**

(45) Veröffentlichungstag und Bekanntmachung des Hinweises auf die Patenterteilung:
**07.12.2016 Patentblatt 2016/49**

(51) Int Cl.:
*G01L 3/10* *(2006.01)*   *G01L 1/14* *(2006.01)*
*B62M 6/50* *(2010.01)*

(21) Anmeldenummer: **12707079.5**

(22) Anmeldetag: **29.02.2012**

(86) Internationale Anmeldenummer:
**PCT/EP2012/053423**

(87) Internationale Veröffentlichungsnummer:
**WO 2012/130550 (04.10.2012 Gazette 2012/40)**

(54) **KURBELTRIEB FÜR EIN FAHRRAD**

CRANK DRIVE FOR A BICYCLE

PÉDALIER POUR UNE BICYCLETTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2011 DE 102011006644**

(43) Veröffentlichungstag der Anmeldung:
**12.02.2014 Patentblatt 2014/07**

(73) Patentinhaber: **Robert Bosch GmbH
70442 Stuttgart (DE)**

(72) Erfinder:
• **SCHULZE-ICKING-KONERT, Georg
77830 Buehlertal (DE)**
• **STAWINSKI, Reinhard
76137 Karlsruhe (DE)**

(56) Entgegenhaltungen:
DE-A1- 10 149 912    FR-A1- 2 634 885
GB-A- 813 261    GB-A- 2 195 183
JP-A- 2000 118 476

• J.D. TURNER: "Development of a rotating-shaft torque sensor for automotive applications", IEE PROCEEDINGS, Bd. 135, Nr. 5, 30. September 1988 (1988-09-30), Seiten 334-338, XP002676294, ISSN: 0143-7054

**Beschreibung**

Stand der Technik

Die vorliegende Erfindung betrifft einen Kurbeltrieb für ein Fahrrad, ein Fahrrad mit einem derartigen Kurbeltrieb sowie eine Sensoranordnung.

Für Fahrräder mit einem elektromotorischen Hilfsantrieb (die auch als "Pedelecs" oder eBikes bezeichnet werden) wird eine Sensoranordnung benötigt, die die Trittfrequenz des Fahrers (Fahrwunsch) erfasst. Diese Sensoranordnung sollte idealerweise in der Tretkurbelwelle integriert sein, um die Signalkette von den Tretkurbeln zur Sensoranordnung möglichst kurz zu halten. Um ein besseres Verhalten insbesondere beim Anfahren an Steigungen zu erhalten, ist eine Sensorkombination für Trittfrequenz und Drehmoment wünschenswert.

Da es sich bei Tretkurbelwellen von Fahrrädern um voll rotierende Wellen handelt, sind aus Gründen der Lebensdauer berührungslose Sensorsysteme von Vorteil. Ein Trittfrequenzsensor (Bestimmung der Rotationsgeschwindigkeit der Tretkurbelwelle) ist leicht mit herkömmlichem Ringmagneten und Hallsensoren als berührungsloses Messsystem realisierbar. Bei Drehmoment-Sensoranordnungen ist dies jedoch schwieriger. Derzeit bekannte Systeme arbeiten zumeist auf induktiver Basis. Diese Systeme haben jedoch den Nachteil, dass sie äußerst anfällig auf störende Magnetfelder reagieren.

So können derartige Systeme durch Austausch der Magnete oder durch Entfernen der Magnete manipuliert werden. Hierdurch ergeben sich bei einer höheren Fahrleistung Probleme, da derartige Leistungserhöhungen einen Gesetzesverstoß darstellen, und bei sich ergebenden niedrigeren Fahrleistungen wäre ein unerwünschter Leistungsverlust die Folge. Ferner kann durch derartige Manipulationen das gesamte System völlig außer Betrieb gesetzt werden. Desweiteren sind aufgrund der benötigten Magnetisierungseigenschaften zumeist spezielle Materialien notwendig, die im Vergleich zu herkömmlichen Materialien, wie z. B. Stahl, teuer sind und häufig nicht den gleichen mechanischen Beanspruchungen standhalten.

Den Stand der Technik nach dem Oberbegriff des Anspruchs 1 stellt hier die JP2000118476 dar. Offenbarung der Erfindung Es ist daher wünschenswert, einen Kurbeltrieb für ein Fahrrad sowie ein Fahrrad mit einem derartigen Kurbeltrieb zu schaffen, bei denen das Drehmoment in der Tretkurbelwelle berührungslos erfasst werden kann, ohne die Nachteile bekannter induktiver Systeme in Kauf nehmen zu müssen.

Die Aufgabe wird erfindungsgemäss durch die Lehre des Patentanspruchs 1 gelöst. Der erfindungsgemäße Kurbeltrieb und das erfindungsgemäße Fahrrad haben den Vorteil einer berührungslos arbeitenden Sensoranordnung zur Erfassung des auf die Tretkurbelwelle aufgebrachten Drehmoments, wobei diese

Sensoranordnung darüber hinaus unempfindlich gegen magnetische Störeinflüsse ist. Ferner ergibt sich der Vorteil, dass für den erfindungsgemäßen Kurbeltrieb und das erfindungsgemäße Fahrrad weitestgehend Standardmaterialien verwendbar sind.

Im einzelnen weist der erfindungsgemäße Kurbeltrieb eine Tretkurbelwelle auf, an deren freien Enden die Tretkurbeln fixiert sind. Ferner ist der Kurbeltrieb mit einem elektromotorischen Hilfsantrieb und einer Drehmoment-Sensoranordnung versehen, die es möglich macht, ein auf die Tretkurbelwelle aufgebrachtes Drehmoment zu erfassen. Hierbei ist die Drehmoment-Sensoranordnung als kapazitive Sensoranordnung ausgebildet, die die Erreichung der zuvor im einzelnen genannten Vorteile, wie insbesondere die Unempfindlichkeit gegenüber magnetischen Störeinflüssen, möglich macht.

Die Unteransprüche haben vorteilhafte Weiterbildungen der Erfindung zum Inhalt.

Da die Tretkurbelwelle bei einer besonders bevorzugten Ausführungsform ein Teil der Sensoranordnung darstellt, ergibt sich der Vorteil einer äußerst kompakten Bauweise, die darüber hinaus eine Minimierung der herzustellenden und zu montierenden Bauteile möglich macht.

Die Kompaktheit der Kurbeltriebanordnung der vorliegenden Erfindung wird noch dadurch verbessert, dass eine Sensorhülse auf der Tretkurbelwelle aufgebracht, vorzugsweise aufgepresst wird, die eine Innenverzahnung aufweist, die mit einer Außenverzahnung der Tretkurbelwelle dadurch zusammenwirkt, dass auf den Zähnen der Außenverzahnung bzw. der Innenverzahnung jeweils Elektroden angeordnet sind, die im Montagezustand einander genau gegenüber liegen.

Eine weitere Vereinfachung des Gesamtaufbaus ergibt sich dadurch, dass auf der Sensorhülse an einem ihrer Enden ein Außen-Zahnkranz angebracht werden kann, der in ein Getrieberad des Hilfsantriebs eingreift.

Die Verbindung zwischen der Sensorhülse und der Tretkurbelwelle kann ferner dadurch vereinfacht werden, dass am anderen Ende der Sensorhülse eine Presspasseinrichtung zu deren Fixierung auf der Tretkurbelwelle vorgesehen ist.

Eine weitere Vereinfachung des Gesamtaufbaus ergibt sich durch den Umstand, dass auf einer Außenwand der Sensorhülse zwei zueinander beabstandete Metallringe angeordnet sind, die galvanisch von der Sensorhülse getrennt sind und mit den Elektroden auf der Innenverzahnung der Sensorhülse bzw. mit den Elektroden auf der Außenverzahnung der Tretkurbelwelle verbunden sind.

Weiterhin bevorzugt ist über der Tretkurbelwelle eine Kunststoffhülse angeordnet, die die gesamte Länge der Tretkurbelwelle überdeckt und die gegenüber dieser frei drehbar vorgesehen ist.

Diese Kunststoffhülse ist auf ihrer Innenwand ebenfalls mit zwei beabstandeten Metallringen versehen, die im Montagezustand der Kunststoffhülse auf der Tretkurbelwelle über deren Metallhülsen angeordnet sind, was ebenfalls vorteilhafterweise zur Kompaktheit des Gesamtaufbaus des erfindungsgemäßen Kurbeltriebs beiträgt.

Die Kunststoffhülse ist bevorzugterweise an einem Ende über ein Lager, vorzugsweise ein Kugellager, auf der Tretkurbelwelle gelagert. Es ist jedoch auch möglich, dass beide Enden der Kunststoffhülse über jeweils ein Lager, vorzugsweise ein Kugellager, auf der Tretkurbelwelle gelagert sind.

In den Ansprüchen 10 und 11 ist das erfindungsgemäße Fahrrad als selbstständig handelbares Objekt definiert.

Kurze Beschreibung der Zeichnung

Nachfolgend wird ein Ausführungsbeispiel der Erfindung unter Bezugnahme auf die begleitende Zeichnung im Detail beschrieben. In der Zeichnung ist:

Figur 1     eine schematische Ansicht eines Fahrrads mit einem integrierten elektromotorischen Hilfsantrieb,

Figur 2     eine schematische Ansicht einer bevorzugten Ausführungsform des erfindungsgemäßen Kurbeltriebs,

Figur 3     eine schematische Ansicht einer Tretkurbelwelle des Kurbeltriebs von Figur 2,

Figur 4     eine schematische Schnittansicht der Tretkurbelwelle von Figur 2,

Figur 5     eine schematische Längsschnittansicht der Tretkurbelwelle von Figur 2,

Figur 6     eine schematische Ansicht der Tretkurbelwelle sowie einer Kunststoffhülse des Kurbeltriebs von Figur 2,

Figur 7     eine schematische Schnittansicht der montierten Drehmoment-Sensoranordnung auf der Tretkurbelwelle,

Figur 8     eine schematische Darstellung eines Funktionsprinzips zur Ermittlung eines Drehmoments des erfindungsgemäßen Kurbeltriebs, und

Figur 9     eine grafische Darstellung von Sensitivitätskennlinien der Sensoranordnung.

Ausführungsform der Erfindung

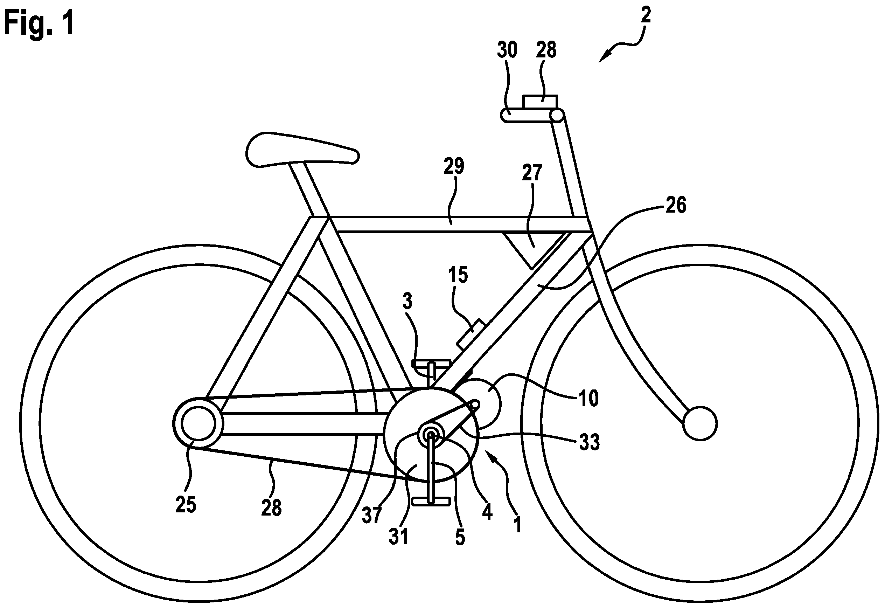

Nachfolgend wird unter Bezugnahme auf die Figuren 1 bis 8 ein erfindungsgemäßer Kurbeltrieb 1 für ein Fahrrad sowie ein Fahrrad mit einem elektrischen Hilfsantrieb und einem derartigen Kurbeltrieb 1 detailliert beschrieben.

Figur 1 zeigt eine schematische Darstellung eines Fahrrads 2 mit einem integrierten elektrischen Zusatzantrieb bzw. Zentralantrieb. Wie aus Figur 1 ersichtlich, umfasst der Zentralantrieb einen Kurbeltrieb 1, einen elektrischen bzw. elektromotorischen Hilfsantrieb 10, eine Steuereinheit 15, eine Bedieneinheit 28 und eine wiederaufladbare Energiequelle 27. Der elektromotorische Hilfsantrieb 10 ist unterhalb eines Unterrohrs 26 und in Fahrtrichtung vor dem Kurbeltrieb 1 des Fahrrads 2 angeordnet und am Unterohr 26 befestigt. Der Kurbeltrieb 1 weist eine Tretkurbelwelle 4 auf, an deren freien Enden eine Tretkurbel 3 bzw. eine Tretkurbel 5 befestigt sind. Wie aus Figur 1 weiter ersichtlich, ist die Steuereinheit 15 am Unterohr 26 befestigt und mit dem elektromotorischen Hilfsantrieb 10 und der Bedieneinheit 28 an einem Lenker 30 des Fahrrads 2 verbunden. Die Steuereinheit 15 ist außerdem zur Energieversorgung ebenso wie der elektromotorische Hilfsantrieb 10 an der wiederaufladbaren Energiequelle 27 angeschlossen, die im oberen Rahmendreieck zwischen dem Unterrohr 26 und einem Oberrohr 29 angeordnet ist. Der elektromotorische Hilfsantrieb 10 ist über ein am Kurbeltrieb 1 befestigtes Zahnrad 17 mittels eines Zahnriemens 33 verbunden, welches unmittelbar benachbart zu einem Kettenblattträger 31 auf der gleichen Seite des Kurbeltriebs 1 angeordnet ist. Der Kettenblattträger 31 ist mit einem am Hinterrad des Fahrrads angeordneten Abtriebsritzel 25 über eine Kette 28 verbunden.

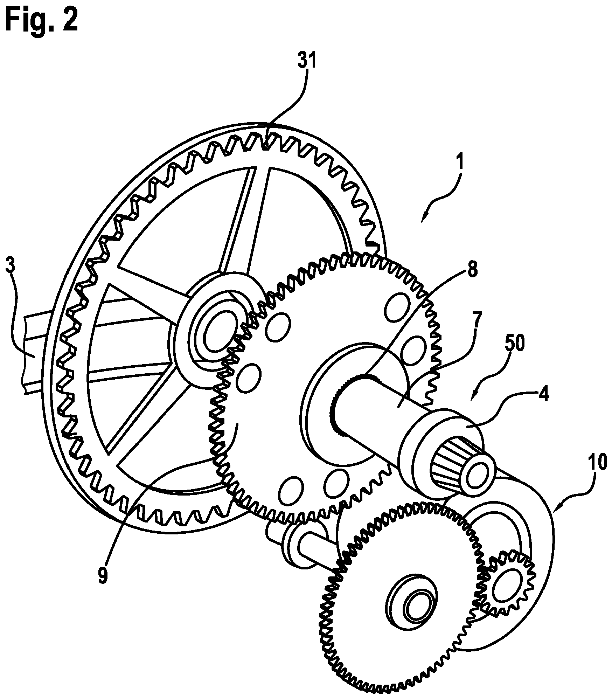

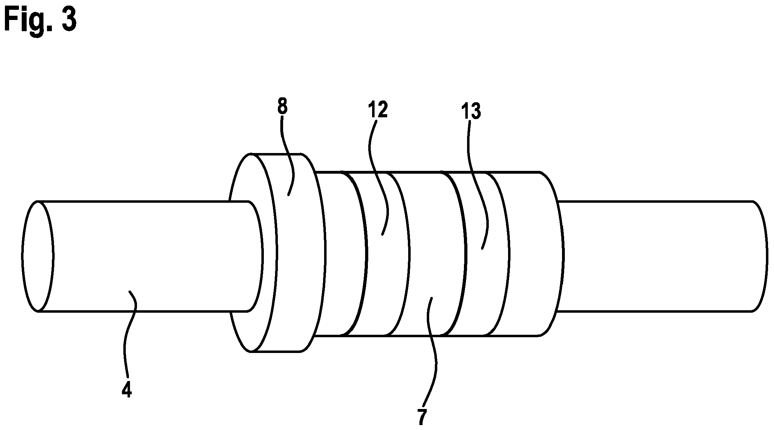

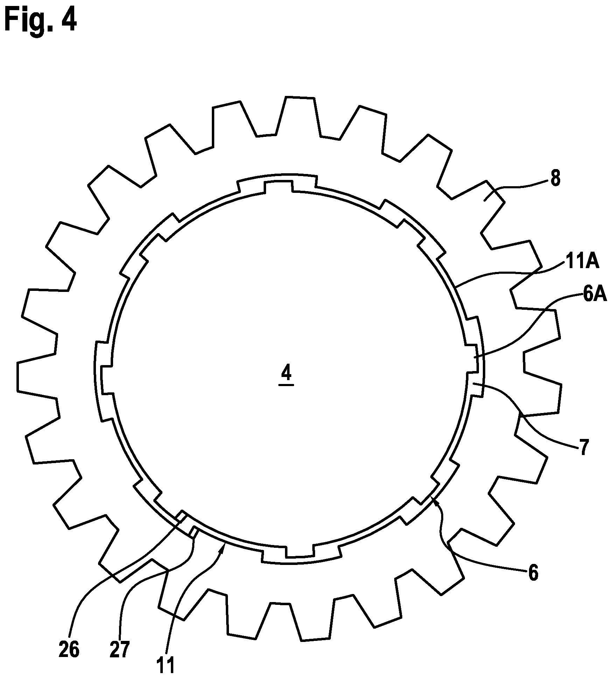

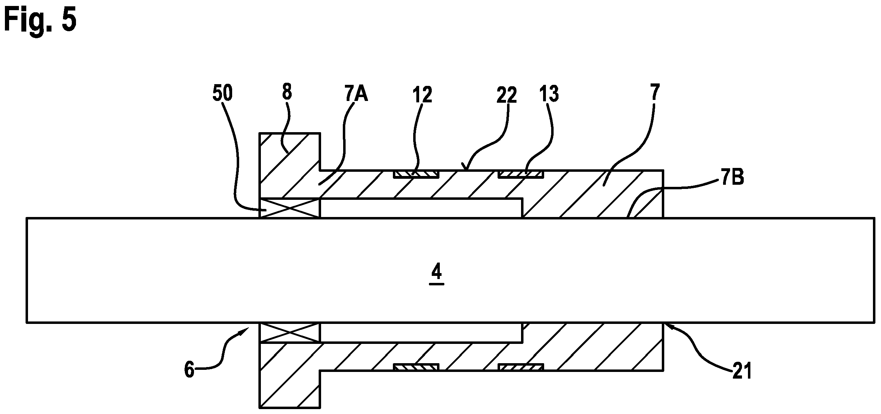

Wie aus Figur 2 ersichtlich, umfasst der Kurbeltrieb 1 ferner eine Sensoranordnung 50 mit einer Sensorhülse 7, an deren einem Ende 7A (vgl. Figur 3 und Figur 5) ein Außen-Zahnkranz 8 angeordnet ist, der in ein Getrieberad 9 des Hilfsantriebs 10 eingreift. Die Tretkurbelwelle 4 ist, wie aus Figur 4 ersichtlich, hierbei ein Teil der Sensoranordnung 50 und weist eine partielle Verzahnung (Verzahnung, die in Längsrichtung nicht durchgehend und/oder nicht komplett um 360° umlaufend ausgebildet ist) bzw.

Außenverzahnung 6 auf, die die Tretkurbelwelle 4 in deren Länge vorzugsweise in einem Verhältnis von ca. 1/3 zu 2/3 teilt. Die Außenverzahnung 6 weist Zähne 6A auf, die auf einer Seite jeweils eine nicht dargestellte Elektrode aufweisen, die gegenüber von (nicht dargestellten) Elektroden auf Zähnen 11A einer Innenverzahnung 11 angeordnet sind, die ein Teil der auf die Tretkurbelwelle 4 aufgepressten Sensorhülse 7 sind. Hierbei sind zwei alternative Anordnungen der Elektroden in der Sensoranordnung 50 möglich. In einer ersten Alternative ist eine Anode 26 (oder Katode) auf jeweils einer Seite von jedem Zahn 6A der Tretkurbelwelle 4 und eine Katode 27 (oder Anode) auf der dazugehörigen gegenüberliegenden Seite des Zahns 11A der Sensorhülse 7 angeordnet.

Dadurch wird eine Drehmomenterfassung in beiden möglichen Drehrichtungen der Tretkurbelwelle ermöglicht.

In einer zweiten Alternative ist eine Anode (oder Katode) auf jeweils beiden Seiten von jedem Zahn 6A der Welle und eine Katode (oder Anode) auf den dazugehörigen gegenüberliegenden Seiten der Zähne 11A vorgesehen. Diese Anordnung weist den Vorteil einer einfacheren Herstellung auf, da beide Zahnkränze (der Tretkurbelwelle 4 und der Sensorhälse 7 jeweils als eine große Elektrode hergestellt werden können.

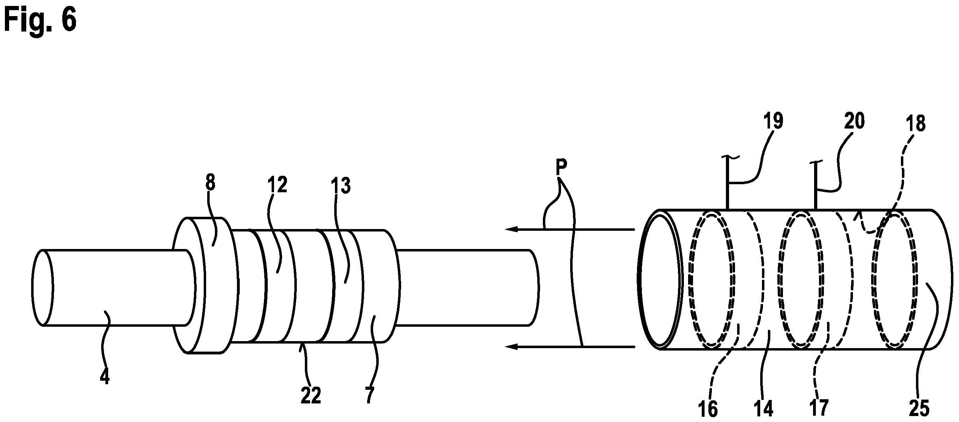

An einem anderen Ende 7B der Sensorhülse 7 ist, wie aus Figur 5 ersichtlich, eine Presspasseinrichtung 21 vorgesehen, mittels der die Sensorhülse 7 an der Tretkurbelwelle 4 fixiert ist. Zudem sind in etwa mittig auf einer Außenwand 22 der Sensorhülse 7 zwei zueinander beabstandete Metallringe 12, 13 angeordnet die von der Sensorhülse 7 galvanisch getrennt sind. Die Metallringe 12, 13 sind über vorzugsweise in der Sensorhülse 7 integrierte, hier nicht sichtbare Leitungen mit den Elektroden auf der Innenverzahnung 11 der Sensorhülse 7 bzw. mit den Elektroden auf der Außenverzahnung 6 der Tretkurbelwelle 4 verbunden. Eine Kunststoffhülse 14 wird, wie weiter aus Figur 6 ersichtlich, in Richtung von Pfeilen P über die gesamte Tretkurbelwelle 4 geschoben. Die Kunststoffhülse 14 ist mittels eines an einem Ende angeordneten Lagers 25 auf der Tretkurbelwelle 4 derart gelagert, dass ein konstanter Abstand zwischen der Tretkurbelwelle 4 und der Kunststoffhülse 14 gewährleistet und die Kunststoffhülse 14 frei drehbar ist. Alternativ kann die Kunststoffhülse 14 auch mittels zweier Lager auf der Tretkurbelwelle 4 gelagert sein.

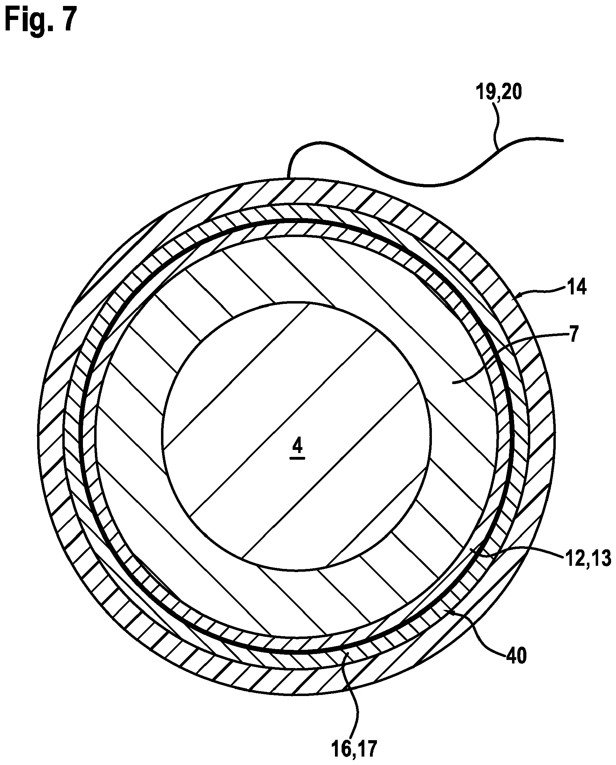

Die Kunststoffhülse 14 weist auf einer Innenwand 18 zwei beabstandete Metallringe 16, 17 auf, die im montierten Zustand der Kunststoffhülse 14 auf der Tretkurbelwelle 4 radial gegenüberliegend bzw. über deren Metallringen 12, 13 angeordnet sind. Die Metallringe 16, 17 sind mit je einer nach außen führenden Leitung 19, 20 zur Signalübertragung an die Steuereinheit 15 verbunden. Wie aus Figur 7 ersichtlich, wirken die leitfähigen Metallringe 12, 13 auf der Außenseite 22 der Sensorhülse 7 zusammen mit den Metallringen 16, 17 auf der Innenseite 18 der Kunststoffhülse 14 als Koppelkondensatoren 40 mit Luft als Dielektrikum, welche im Abstand dazwischen vorliegt.

Die Wirkkette beginnt mit einem vom Fahrer an den Tretkurbeln 3, 5 aufgebrachten Drehmoment, das die Tretkurbelwelle 4 in Rotation versetzt. Über die auf der Tretkurbelwelle 4 aufgepresste Sensorhülse 7 wird dann die Pedalkraft in Form eines Drehmoments auf das Getrieberad 9 übertragen, das in den Außen-Zahnkranz 8 der Sensorhülse 7 eingreift. Da die Sensorhülse 7 nur am Ende 7A auf die Tretkurbelwelle 4 aufgepresst ist, wird eine elastische Verdrehung der Sensorhülse 7 zwischen der Presspasseinrichtung 21 und dem Außen-Zahnkranz 8 erzeugt. Die Intensität der Verdrehung ist abhängig von einem Material und der Geometrie (Wandstärke/Länge) der Sensorhülse 7 sowie der Länge der Presspasseinrichtung 21. Über diese Parameter kann eine Einstellung/Anpassung der Verdrehungsstärke erfolgen.

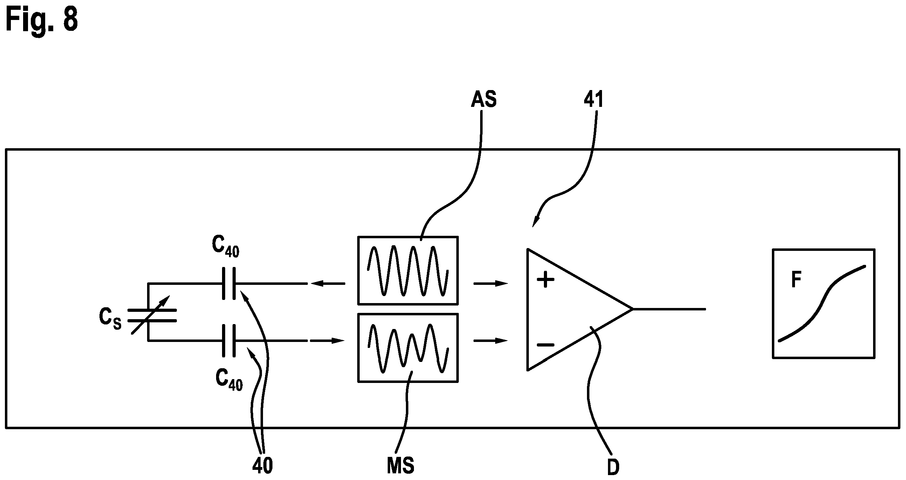

Durch die Verdrehung des Außen-Zahnkranzes 8 der Sensorhülse 7 zur Innenverzahnung 11 der Tretkurbelwelle 4 werden die Zwischenräume zwischen der Innenverzahnung 11 und der Außenverzahnung 6 auf einer Seite kleiner oder größer. Diese Zwischenräume bilden quasi einen Abstand d eines einfachen Plattenkondensators, dessen beiden Elektroden den sich gegenüberliegenden Elektrodenflächen der Tretkurbelwelle 4 und der Sensorhülse 7 entsprechen, wie dies durch die allgemeine Formel für einen Plattenkondensator mit $C = \varepsilon * A/d$ definiert ist. Die Summe der einzelnen Flächen auf jedem Zahn ergibt eine Gesamtfläche, die eine resultierende Sensorkapazität Cs der Drehmoment-Sensoranordnung 50 bildet. Durch die Verdrehung der Sensorhülse 7 wird diese resultierende Sensorkapazität Cs verändert. Hierbei kann, wie in Figur 8 dargestellt, die sich ändernde Sensorkapazität Cs aus Kapazitäten $C_{40}$ der Koppelkondensatoren 40 z. B. durch eine Signalmodulation bestimmt werden. Zur Verarbeitung der Signale ist eine Verstärkungs- und Filterschaltung 41 erforderlich, die der Sensoranordnung 50 nachgeschaltet ist. Hierin wird ein homogenes, hochfrequentes Anregungssignal AS durch einen sich ändernden komplexen Widerstand in Phase, Frequenz und Amplitude in ein moduliertes Signal MS moduliert. Über eine dieser drei Modulationsarten kann durch einen geeigneten elektronischen Demodulator D die Änderung der Sensorkapazität Cs ermittelt werden. Mittels einer zu bestimmenden, systemabhängigen Übertragungsfunktion F kann daraus wiederum das anliegende Drehmoment bestimmt werden. Hierbei sei angemerkt, dass als Detektionsverfahren z. B. auch die Referenzkapazität eines $\mu$C verwendet werden kann, indem die Sensorkapazität mit der Referenzkapazität einen kapazitiven Spannungsteiler bildet.

Die Übertragung der hierfür benötigten Frequenzsignale auf und von der Tretkurbelwelle 4 findet über die beiden Metallringe 16, 17 der Kunststoffhülse 14 auf die Sensorhülse 7 mittels kapazitiver Koppelung an den Koppelkondensatoren 40 statt. Hierzu müssen die jeweils zugeordneten Metallringe 12, 13; 16, 17, wie oben beschrieben, auf der Tretkurbelwelle 4 bzw. der Kunststoffhülse 14 angeordnet sein und so genau wie möglich radial übereinander liegen. Ferner sollte der Zwischenraum so gering und konstant wie möglich sein, ohne dass sich die Metallringe 12, 13; 16, 17 berühren. Zudem sollten die Metallringe 12, 13; 16, 17 möglichst die gleiche Breite aufweisen, die wiederum so groß wie möglich sein sollte. Durch das Lager 25 zwischen der Tretkurbelwelle 4 und der Kunststoffhülse 7 bleibt die Tretkurbelwelle 4 frei drehend und das Sensorsignal kann ohne zusätzliche Bauteile, wie z. B. Schleifkontakte o. ä., an der Kunststoffhülse 14 abgegriffen werden.

Eine Kapazität $C_{40}$ der Koppelkondensatoren 40 bzw. eine resultierende Sensorkapazität Cs errechnet sich beispielhaft wie folgt:

Radius Sensorhülse: r = 20mm
Breite der Metallringe: b = 15mm
mittlerer Abstand der Metallringe: d = 0,5mm
Dielektrikum Luft: $\varepsilon$ = 8,854 * $10^{-12}$ As/Vm

$$A = 2\pi * r * b = 1885mm^2$$

$$C_{40} = \varepsilon * A/d = 3,77m * 8,854 * 10^{-12} \text{ As/Vm} = 33,38 \text{ pF}$$

Fläche einer Zahnkante: As = 10mm * 2mm
Anzahl Zähne des Zahnkranzes: n = 64
Mittlerer Abstand: ds = 0,5mm

$$As = 10mm * 2mm * 64 = 1280mm^2$$

$$Cs = \varepsilon * A/ds = 2,56m * 8,854 * 10^{-12} \text{ As/Vm} = 22,67 \text{ pF}$$

Wie aus dieser Beispielrechnung zu sehen, ist eine Koppelkapazität $C_{40}$ von ca. 30 pF durchaus erreichbar, wenn der äußere Radius der Sensorhülse 7 ca. 2,5cm, die Breite der Metallringe 12, 13; 16, 17 gleich 1,5cm und der Abstand zwischen den gegenüberliegenden Metallringen 12, 13; 16, 17 ca. 0,5mm beträgt.

Als Sensorkapazität Cs wird in diesem Beispiel über 20 pF ermittelt, wobei eine Zahnkante ca. 10 x 2mm groß ist, ein Zahnkranz 64 Zähne aufweist und ein mittlerer Abstand 0,5mm beträgt.

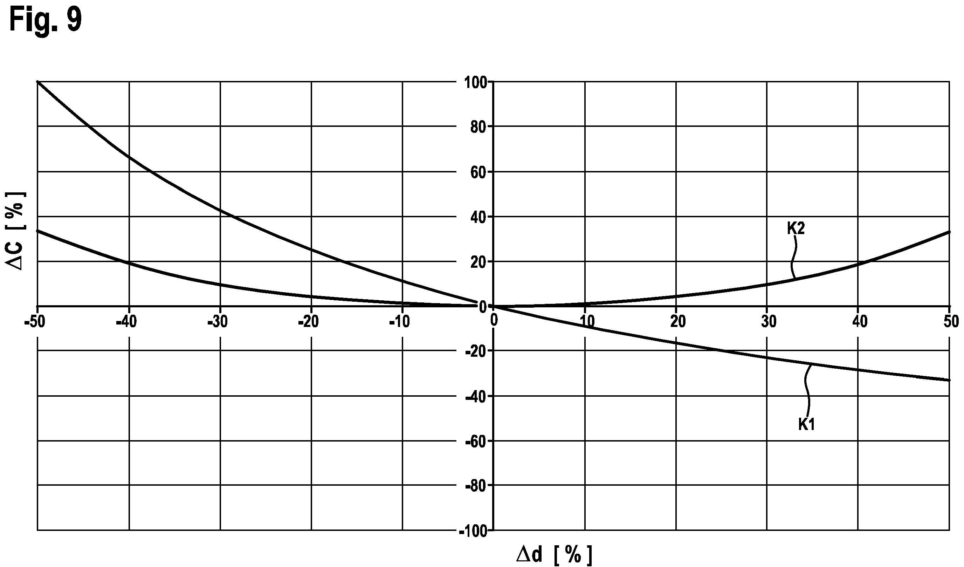

In Fig. 9 sind die Sensivitätskennlinien der zuvor in Bezug auf Fig. 4 beschriebenen Alternativen der Elektrodenanordnung der Sensoranordnung 7 als Kapazitätsänderung $\Delta C$ [%] in Abhängigkeit von einer Abstandsänderung $\Delta d$ [%] grafisch dargestellt. Hierbei repräsentiert die Kurve K1 einen Signalhub der erste Alternative bzw. die Kurve K2 den der zweiten Alternative.

Eine Vergrößerung der Sensorkapazität Cs hat aufgrund des größeren Signalhubs eine deutlich reduzierte Störanfälligkeit zur Folge. Eine Vergrößerung der Sensorkapazität ist ohne Änderungen der Dimensionen der Bauteile bzw. des gesamten Bauvolumens allerdings nur durch ein anderes Dielektrikum erreichbar. Hierzu kann der Zwischenraum zwischen der Tretkurbelwelle 4 und der Sensorhülse 7 z. B. vorzugsweise mit einem Silikonschaum (Silikon mit eingelagerten Luftbläschen als Ausgleichsvolumen) ausgefüllt werden, wodurch eine bis zu dreifache Kapazitätserhöhung erreichbar ist. Hierdurch wird ferner eine erhöhte mechanische Stabilität sowie die Isolierung der Elektroden der Sensoranordnung 50 erreicht.

Der erfindungsgemäße Kurbeltrieb 1 stellt mittels der Drehmoment-Sensoreinrichtung 50 eine berührungslose, kapazitive Erfassung des auf die Tretkurbelwelle 4 aufgebrachten Drehmoments bereit, die weitgehend unempfindlich gegen magnetische Störeinflüsse ist. Darüber hinaus können für die verwendeten Bauteile weitestgehend kostengünstige Standardmaterialien verwendet werden, die auch höchsten mechanischen Beanspruchungen im Fahrbetrieb standhalten.

Obwohl die Sensoranordnung 50 voranstehend am Beispiel eines Kurbeltriebes für ein Fahrrad erläutert wurde, ist die Sensoranordnung 50 nicht auf diesen Einsatzzweck beschränkt. Vielmehr stellt sie ein selbstständig handelbares Objekt dar, das zur Drehmomentmessung bei Wellen Verwendung finden kann, die Teil anderer technischer Anordnungen sind.

**Patentansprüche**

1. Kurbeltrieb für ein Fahrrad (2), umfassend:

   - eine Tretkurbelwelle (4),

- zwei Tretkurbeln (3, 5), die an freien Enden der Tretkurbelwelle (4) fixiert sind, und
- eine Drehmoment-Sensoranordnung (50) zur Erfassung eines auf die Tretkurbelwelle (4) aufgebrachten Drehmoments,
- wobei die Drehmoment-Sensoranordnung als kapazitive Sensoranordnung (50) ausgebildet ist,

wobei die Tretkurbelwelle (4) ein Teil der Sensoranordnung (50) ist, die eine Außenverzahnung (6) aufweist, deren Zähne (6A) auf einer Seite jeweils eine Elektrode aufweisen, die gegenüber von Elektroden auf Zähnen (11A) einer Innenverzahnung (11) angeordnet sind, die ein Teil einer auf die Tretkurbelwelle (4) aufgepressten Sensorhülse (7) sind,

wobei eine Kunststoffhülse (14) über der gesamten Tretkurbelwelle (4) angeordnet ist, die um die Tretkurbelwelle (4) frei drehbar ist,

**dadurch gekennzeichnet, dass**

die Kunststoffhülse (14) auf ihrer Innenwand (18) mit zwei beabstandeten Metallringen (16, 17) versehen ist, die mit je einer nach außen führenden Leitung (19, 20) verbunden sind und die im Montagezustand der Kunststoffhülse (14) auf der Tretkurbelwelle (4) über deren Metallringen (12, 13) angeordnet sind.

2.  Kurbeltrieb nach Anspruch 1, **dadurch gekennzeichnet, dass** die Sensorhülse (7) an einem Ende (7A) einen Außen-Zahnkranz (8) aufweist, der in ein Getrieberad (9) eines Hilfsantriebes (10) eingreift.

3.  Kurbeltrieb nach Anspruch 1 oder 2, **dadurch gekennzeichnet, dass** an einem anderen Ende (7B) der Sensorhülse (7) eine Presspasseinrichtung (21) zur Tretkurbelwelle (4) angeordnet ist.

4.  Kurbeltrieb nach einem der Ansprüche 1 bis 3, **dadurch gekennzeichnet, dass** in etwa mittig auf eine Außenwand (22) der Sensorhülse (7) zwei zueinander beabstandete Metallringe (12, 13) angeordnet sind, die galvanisch von der Sensorhülse getrennt sind.

5.  Kurbeltrieb nach Anspruch 4, **dadurch gekennzeichnet, dass** die Metallringe (12, 13) über, vorzugsweise in der Sensorhülse (7) integrierte, Leitungen mit den Elektroden auf der Innenverzahnung (11) der Sensorhülse (7) bzw. mit den Elektroden auf der Außenverzahnung (6) der Tretkurbelwelle (4) verbunden sind.

6.  Kurbeltrieb nach Anspruch 1, **dadurch gekennzeichnet, dass** die Kunststoffhülse (14) an einem oder beiden ihrer Enden über jeweils ein Lager (25) auf der Tretkurbelwelle (4) gelagert ist.

7.  Kurbeltrieb nach einem Ansprüche 1 bis 6, **dadurch gekennzeichnet, dass** die Außenverzahnung (6) der Tretkurbelwelle (4) als partielle Verzahnung ausgebildet ist.

8.  Kurbeltrieb nach einem der Ansprüche 1 bis 7, **gekennzeichnet durch** einen elektromotorischen Hilfsantrieb (10).

9.  Kurbeltrieb nach einem der Ansprüche 1 bis 8, **dadurch gekennzeichnet, dass** die Außenverzahnung (6) die Tretkurbelwelle (4) in ihrer Länge in etwa 1/3 zu 2/3 teilt.

10. Fahrrad mit einem Kurbeltrieb (1), umfassend:

- eine Tretkurbelwelle (4), zwei Tretkurbeln (3, 5), die an freien Enden der Tretkurbelwelle (4) fixiert sind, und eine Drehmoment-Sensoranordnung (50) zur Erfassung eines auf die Tretkurbelwelle (4) aufgebrachten Drehmoments,
- wobei die Drehmoment-Sensoranordnung als kapazitive Sensoranordnung (50) ausgebildet ist,

wobei die Tretkurbelwelle (4) ein Teil der Sensoranordnung (50) ist, die eine Außenverzahnung (6) aufweist, deren Zähne (6A) auf einer Seite jeweils eine Elektrode aufweisen, die gegenüber von Elektroden auf Zähnen (11A) einer Innenverzahnung (11) angeordnet sind, die ein Teil einer auf die Tretkurbelwelle (4) aufgepressten Sensorhülse (7) sind, wobei eine Kunststoffhülse (14) über der gesamten Tretkurbelwelle (4) angeordnet ist, die um die Tretkurbelwelle (4) frei drehbar ist, **dadurch gekennzeichnet, dass** die Kunststoffhülse (14) auf ihrer Innenwand (18) mit zwei beabstandeten Metallringen (16, 17) versehen ist, die mit je einer nach außen führenden Leitung (19, 20) verbunden sind und die im Montagezustand der Kunststoffhülse (14) auf der Tretkurbelwelle (4) über deren Metallringen (12, 13) angeordnet sind.

11. Fahrrad nach Anspruch 10, **dadurch gekennzeichnet, dass** der Kurbeltrieb (1) wenigstens eines der Merkmale der Ansprüche 2 bis 9 umfasst.

**Claims**

1. Crank mechanism for a bicycle (2), comprising:

   - a pedal crank shaft (4),
   - two pedal cranks (3, 5) which are fixed at free ends of the pedal crank shaft (4), and
   - a torque sensor arrangement (50) for detecting a torque which is applied to the pedal crank shaft (4),
   - the torque sensor arrangement being configured as a capacitive sensor arrangement (50),

   wherein the pedal crank shaft (4) is part of the sensor arrangement (50) which has an external toothing system (6), the teeth (6A) of which have in each case one electrode on one side, which teeth are arranged opposite electrodes on teeth (11A) of an internal toothing system (11) which are part of a sensor sleeve (7) which is pressed onto the pedal crank shaft (4), wherein a plastic sleeve (14) is arranged over the entire pedal crank shaft (4), which plastic sleeve (14) can be rotated freely about the pedal crank shaft (4), **characterized in that**, on its inner wall (18), the plastic sleeve (14) is provided with two metal rings (16, 17) which are spaced apart, are connected to in each case one outwardly leading line (19, 20) and are arranged in the assembled state of the plastic sleeve (14) on the pedal crank shaft (4) over its metal rings (12, 13).

2. Crank mechanism according to Claim 1, **characterized in that**, at one end (7A), the sensor sleeve (7) has an external toothed rim (8) which engages into a gear mechanism gear (9) of an auxiliary drive (10).

3. Crank mechanism according to Claim 1 or 2, **characterized in that** an interference fit device (21) to the pedal crank shaft (4) is arranged at another end (7B) of the sensor sleeve (7).

4. Crank mechanism according to one of Claims 1 to 3, **characterized in that** two metal rings (12, 13) which are spaced apart from one another and are separated galvanically from the sensor sleeve (7) are arranged approximately centrally on an outer wall (22) of the sensor sleeve (7).

5. Crank mechanism according to Claim 4, **characterized in that** the metal rings (12, 13) are connected via lines which are preferably integrated into the sensor sleeve (7) to the electrodes on the internal toothing system (11) of the sensor sleeve (7) and to the electrodes on the external toothing system (6) of the pedal crank shaft (4).

6. Crank mechanism according to Claim 1, **characterized in that** the plastic sleeve (14) is mounted at one or both of its ends via in each case one bearing (25) on the pedal crank shaft (4).

7. Crank mechanism according to one of Claims 1 to 6, **characterized in that** the external toothing system (6) of the pedal crank shaft (4) is configured as a partial toothing system.

8. Crank mechanism according to one of Claims 1 to 7, **characterized by** an electric motor auxiliary drive (10).

9. Crank mechanism according to one of Claims 1 to 8, **characterized in that** the external toothing system (6) shares approximately 1/3 to 2/3 the length of the pedal crank shaft (4).

10. Bicycle having a crank mechanism (1), comprising:

    - a pedal crank shaft (4), two pedal cranks (3, 5) which are fixed at free ends of the pedal crank shaft (4), and a torque sensor arrangement (50) for detecting a torque which is applied to the pedal crank shaft (4),
    - the torque sensor arrangement being configured as a capacitive sensor arrangement (50),

    wherein the pedal crank shaft (4) is part of the sensor arrangement (50) which has an external toothing system (6), the teeth (6A) of which have in each case one electrode on one side, which teeth are arranged opposite electrodes on teeth (11A) of an internal toothing system (11) which are part of a sensor sleeve (7) which is pressed onto the pedal crank shaft (4), wherein a plastic sleeve (14) is arranged over the entire pedal crank shaft (4), which plastic sleeve (14) can be rotated freely about the pedal crank shaft (4), **characterized in that**, on its inner wall (18), the plastic sleeve (14) is provided with two metal rings (16, 17) which are spaced apart, are connected to in each case one outwardly leading line (19, 20) and are arranged in the assembled state of the plastic sleeve (14) on the pedal crank shaft (4) over its metal rings (12, 13).

11. Bicycle according to Claim 10, **characterized in that** the crank mechanism (1) comprises at least one of the features of Claims 2 to 9.

**Revendications**

1. Mécanisme à manivelle pour bicyclette (2), comprenant :

 - un axe de pédalier (4),
 - deux pédaliers (3, 5) fixés à des extrémités libres de l'axe de pédalier (4), et
 - un système capteur de couple de rotation (50) pour détecter un couple de rotation appliqué à l'axe de pédalier (4),
 - dans lequel le système capteur de couple de rotation est réalisé sous la forme d'un système capteur capacitif (50),

 dans lequel l'axe de pédalier (4) est une partie du système capteur (50) comportant une denture extérieure (6) dont les dents (6A) ont respectivement une électrode sur un côté, lesquelles dents sont disposées en face d'électrodes sur des dents (11A) d'une denture intérieure (11), qui font partie d'un manchon de capteur (7) emmanché sur l'axe de pédalier (4),
 dans lequel un manchon en matière plastique (14), qui peut être mis en rotation librement autour de l'axe de pédalier (4), est disposé sur la totalité de l'axe de pédalier (4),
 **caractérisé en ce que**
 le manchon en matière plastique (14) est muni sur sa paroi intérieure (18) de deux bagues métalliques (16, 17) espacées, qui sont respectivement reliées à une ligne (19, 20) conduisant vers l'extérieur et qui, à l'état monté du manchon en matière plastique (14), sont disposées sur l'axe de pédalier (4) sur ses bagues métalliques (12, 13).

2. Mécanisme à manivelle selon la revendication 1, **caractérisé en ce que** le manchon de capteur (7) comporte, à une extrémité (7A), une couronne dentée extérieure (8) qui s'engage dans un pignon (9) d'un entraînement auxiliaire (10).

3. Mécanisme à manivelle selon la revendication 1 ou 2, **caractérisé en ce qu'**un dispositif d'adaptation de pression (21) à l'axe de pédalier (4) est disposé sur une autre extrémité (7B) du manchon de capteur (7).

4. Mécanisme à manivelle selon l'une quelconque des revendications 1 à 3, **caractérisé en ce que** deux bagues métalliques (12, 13) espacées l'une de l'autre sont disposées pratiquement au centre d'une paroi extérieure (22) du manchon de capteur (7), lesquelles bagues sont séparées de manière galvanique du manchon de capteur (7).

5. Mécanisme à manivelle selon la revendication 4, **caractérisé en ce que** les bagues métalliques (12, 13) sont reliées par l'intermédiaire de lignes, de préférence intégrées au manchon de capteur (7), aux électrodes sur la denture intérieure (11) du manchon de capteur (7) et aux électrodes sur la denture extérieure (6) de l'axe de pédalier (4).

6. Mécanisme à manivelle selon la revendication 1, **caractérisé en ce que** le manchon en matière plastique (14), à l'une de ses extrémités ou aux deux, est/sont respectivement montée(s) sur l'axe de pédalier (4) par l'intermédiaire d'un palier (25).

7. Mécanisme à manivelle selon l'une quelconque des revendications 1 à 6, **caractérisé en ce que** la denture extérieure (6) de l'axe de pédalier (4) est réalisée sous la forme d'une denture partielle.

8. Mécanisme à manivelle selon l'une quelconque des revendications 1 à 7, **caractérisé par** un entraînement auxiliaire (10) à moteur électrique.

9. Mécanisme à manivelle selon l'une quelconque des revendications 1 à 8, **caractérisé en ce que** la denture extérieure (6) divise pratiquement l'axe de pédalier (4) sur sa longueur selon un rapport de 1/3 à 2/3.

10. Bicyclette comportant un mécanisme à manivelle (1), comprenant :

- un axe de pédalier (4), deux pédaliers (3, 5) qui sont fixés à des extrémités libres de l'axe de pédalier (4), et un système capteur de couple de rotation (50) pour détecter un couple de rotation appliqué à l'axe de pédalier (4),
- dans lequel le système capteur de couple de rotation est réalisé sous la forme d'un système capteur capacitif (50),

dans lequel l'axe de pédalier (4) est une partie du système capteur (50) qui comporte une denture extérieure (6) dont les dents (6A) ont respectivement une électrode sur un côté, lesquelles dents sont disposées en face d'électrodes sur des dents (11A) d'une denture intérieure (11) faisant partie d'un manchon de capteur (7) emmanché sur l'axe de pédalier (4),

dans lequel un manchon en matière plastique (14), qui peut être mis en rotation librement autour de l'axe de pédalier (4), est disposé sur la totalité de l'axe de pédalier (4) **caractérisé en ce que**

le manchon en matière plastique (14) est muni sur sa paroi intérieure (18) de deux bagues métalliques (16, 17) espacées, qui sont respectivement reliées à une ligne (19, 20) conduisant vers l'extérieur et qui, à l'état monté du manchon en matière plastique (14), sont disposées sur l'axe de pédalier (4) sur ses bagues métalliques (12, 13).

**11.** Bicyclette selon la revendication 10, **caractérisé en ce que** le mécanisme à manivelle (1) comporte au moins l'une des caractéristiques des revendications 2 à 9.

Fig. 1

EP 2 694 936 B1

# Fig. 2

11

Fig. 3

**Fig. 4**

**Fig. 5**

**Fig. 6**

## Fig. 7

19,20

14

7

4

12,13

40

16,17

Fig. 8

EP 2 694 936 B1

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000118476 B